# EUROPÄISCHE PATENTANMELDUNG

(11) **EP 0 810 460 A1**
(43) Veröffentlichungstag der Anmeldung: **03.12.1997**
(21) Anmeldenummer: 97108615.2
(22) Anmeldetag: 28.05.1997
(51) Int. Cl.: G02C 5/14

(54) **Brillenhaltevorrichtung**

(30) Priorität: 01.06.1996 DE 19622114
(71) Anmelder: COP Choice of Presentation Büttner Stiebing GbR, 42855 Remscheid (DE)
(72) Erfinder: Stiebing, Marc, 42855 Remscheid (DE); Büttner, Elmar, 42657 Solingen (DE)
(74) Vertreter: COHAUSZ HASE DAWIDOWICZ & PARTNER

(57) **Zusammenfassung**

Die Erfindung betrifft eine Vorrichtung zum Halten einer Brille am Kopf mit einem am Brillenbügel befestigten Langteil insbesondere einem Band, einer Schnur oder einer Kette, wobei das Langteil mit seinen beiden Enden am selben Bügel befestigt ist.

## Beschreibung

Die Erfindung betrifft eine Vorrichtung zum Halten einer Brille am Kopf mit einem am Brillenbügel befestigten Langteil insbesondere einem Band, einer Schnur oder einer Kette.

Um zu verhindern, daß eine Brille vom Kopf des Trägers insbesondere während der Ausübung einer Sportart herunterfällt, ist es bekannt, ein Langteil in Form eines Bandes mit einem Ende am einen Brillenbügel und mit dem anderen Ende am anderen Brillenbügel zu befestigen, so daß das Band am Hinterkopf entlangläuft. Es hat sich gezeigt, daß eine solche Befestigung nicht immer ausreicht, um zu gewährleisten, daß die Brille vom Kopf nicht abrutscht.

Aufgabe der Erfindung ist es, eine Vorrichtung zum Halten einer Brille derart zu verbessern, daß bei einfacher Konstruktion und Handhabung ein sehr sicherer Halt der Brille am Kopf gegeben ist.

Diese Aufgabe wird erfindungsgemäß dadurch gelöst, daß ein Langteilende am freien Ende des Bügels und das andere Ende des Langteils in einem mittleren Bereich des Bügels befestigt ist.

Hierdurch kann jeder Brillenbügel getrennt am dazugehörigen Ohr sicher befestigt werden, ohne befürchten zu müssen, daß insbesondere beim Sport die Brille abfällt insbesondere nicht nach oben abgehoben wird. Dabei ist die Haltevorrichtung einfach in der Konstruktion, Herstellung und Handhabung und kann bei üblichen Brillenbügeln verwendet werden, ohne diese erheblich verändern zu müssen.
Hierbei bildet das Langteil zusammen mit einem Bereich des Bügels einen unrunden Ring, der ein Ohr umgibt.

Besonders vorteilhaft ist es, wenn mindestens an einem der beiden Befestigungsstellen ein Ende des Langteils lösbar befestigt ist. Hierbei kann mindestens ein Ende des Langteils einen Clip zur rastbaren Befestigung am Bügel aufweisen.

Eine sehr sichere Befestigung des Langteils am Brillenbügel ist dann gegeben, wenn das freie Bügelende, insbesondere ein am Bügelende befestigtes Kunststoffteil, eine Öffnung insbesondere eine Bohrung aufweist, in der ein Ende des Langteils befestigt ist. Alternativ oder zusätzlich kann hierbei das Langteil durch die Öffnung verlaufen.

Eine besonders einfache Befestigung wird erreicht, wenn mindestens ein Ende des Langteils durch eine Schlaufe am Bügel befestigt ist.

Besonders vorteilhaft ist es, wenn mindestens ein Ende des Langteils an einem Kunststoffüberzug fest insbesondere angeformt ist, der den Bügel insbesondere das freie Bügelende umgibt. Hierbei kann der Kunststoffüberzug über den Bügel insbesondere über das freie Bügelende lösbar befestigt sein.

Unterschiedliche Ausführungsformen der Erfindung sind perspektivisch in den Zeichnungen dargestellt und werden im folgenden näher beschrieben:

An einem Brillenbügel 1, insbesondere aber stets an beiden Brillenbügeln einer Brille, ist ein Langteil 2 mit seinen beiden Enden derart befestigt, daß das Langteil 2 mit einem Bereich 3 des Bügels eine Öffnung 4 bildet, in der das nicht dargestellte Ohr des Brillenträgers einliegt. Langteil 2 und Bügelbereich 3 umgeben somit rundum das jeweilige Ohr, so daß die Brille sicher gehalten ist.

Das Langteil 2 kann ein Band, eine Schnur oder eine Kette aus den unterschiedlichsten Materialien sein. Beide Enden des Langteils sind jeweils am selben Bügel 1 befestigt, wobei vorzugsweise ein Langteilende am freien Ende des Bügels und das andere Ende des Langteils in einem mittleren Bereich des Bügels befestigt ist. Vorzugsweise ist eine Befestigung oder sind beide Befestigungen lösbar.

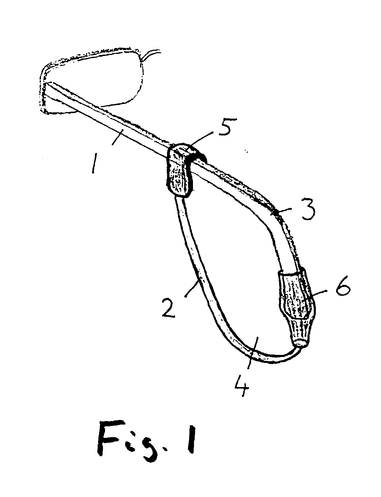

Im Ausführungsbeispiel nach Figur 1 ist an einem Ende des Langteils 2 ein Clip 5 befestigt, der rastend bzw. einschnappend über dem mittleren Bereich des Bügels 1 von der Seite her geschoben wird. Hierzu weist der Clip 5 vorzugsweise eine federnde Rastzunge oder einen federnd beaufschlagten Rastschieber auf. Das andere Ende des Langteils ist an einem schlauchabschnittförmigen Überzug 6 befestigt insbesondere angeformt, der über das freie Ende des Bügels 1 schiebbar ist. Der Überzug 6 besteht vorzusweise aus Kunststoff, insbesondere aus Neopren. Damit sind beide Befestigungsstellen des Langteils 2 vom Bügel 1 lösbar.

Das Ausführungsbeispiel nach Figur 2 unterscheidet sich von dem nach Figur 1 dadurch, daß im mittleren Bereich des Bügels 1 das Langteil 2 an seinem Ende eine Schlaufe 7 bildet, durch die der Bügel 1 verläuft.

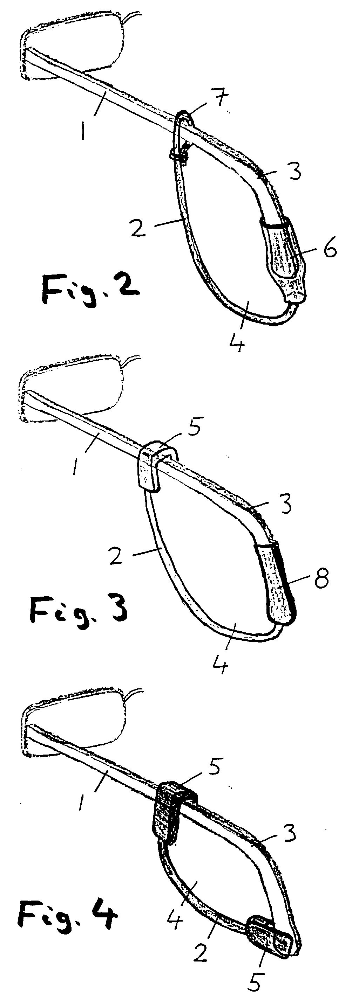

Beim Ausführungsbeispiel nach Figur 3 ist das Langteil wiederum im mittleren Bereich des Bügels durch einen Clip 5 lösbar gehalten. Das andere Ende des Langteils 2 ist an einem Kunststoffüberzug 8 fest insbesondere angeformt, wobei dieser Überzug 8 derjenige Überzug sein kann, der üblicherweise den Endbereich eines Brillenbügels unlösbar umgibt.

Beim Ausführungsbeispiel nach Figur 4 sind beide Enden des Langteils durch einen Clip befestigt, wobei am Bügelende eine Öffnung ist, in die der hintere Clip einrastet.

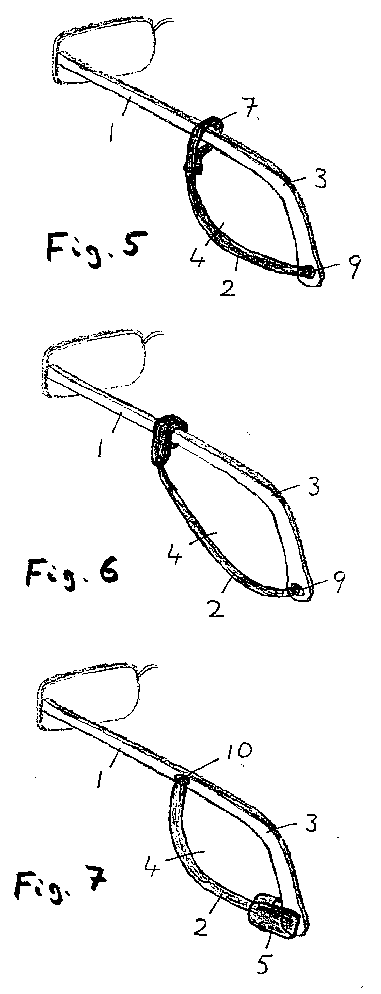

Im Ausführungsbeispiel nach Figur 5 ist im mittleren Bereich eine Befestigung mit einer Schlaufe und im Bügelende eine Befestigung in einer Öffnung 9 vorgesehen.

Im Ausführungsbeispiel nach Figur 6 besteht eine Befestigung durch einen Clip und in der Öffnung 9 und im Ausführungsbeispiel nach Figur 7 eine Befestigung im mittleren Bereich in einer dort vorgesehenen Öffnung 10 und am Ende durch einen Clip 5.

## Patentansprüche

1. Vorrichtung zum Halten einer Brille am Kopf mit einem am Brillenbügel (1) befestigten Langteil (2) insbesondere einem Band, einer Schnur oder einer Kette, wobei das Langteil (2) mit seinen beiden Enden am selben Bügel (1) befestigt ist, **dadurch gekennzeichnet,** daß ein Langteilende am freien Ende des Bügels und das andere Ende des Langteils in einem mittleren Bereich des Bügels befestigt ist.

2. Vorrichtung nach Anspruch 1, **dadurch gekennzeichnet,** daß das Langteil (2) zusammen mit einem Bereich (3) des Bügels (1) einen unrunden Ring bildet, der ein Ohr umgibt.

3. Vorrichtung nach Anspruch 1 oder 2, **dadurch gekennzeichnet,** daß mindestens an einem der beiden Befestigungsstellen ein Ende des Langteils (2) lösbar befestigt ist.

4. Vorrichtung anch Anspruch 3, **dadurch gekennzeichnet,** daß mindestens ein Ende des Langteils (2) einen Clip (5) zur rastenden Befestigung am Bügel aufweist.

5. Vorrichtung nach einem der vorhergehenden Ansprüche, **dadurch gekennzeichnet,** daß das freie Bügelende, insbesondere ein am Bügelende befestigtes Kunststoffteil (8), eine Öffnung (9) insbesondere eine Bohrung aufweist, in der ein Ende des Langteils (2) befestigt ist.

6. Vorrichtung nach einem der vorhergehenden Ansprüche, **dadurch gekennzeichnet,** daß das freie Bügelende, insbesondere ein am Bügelende befestigtes Kunststoffteil (8), eine Öffnung (9) insbesondere eine Bohrung aufweist, durch die das Langteil (2) hindurch verläuft.

7. Vorrichtung nach einem der vorhergehenden Ansprüche, **dadurch gekennzeichnet,** daß mindestens ein Ende des Langteils (2) durch eine Schlaufe (7) am Bügel (1) befestigt ist.

8. Vorrichtung nach einem der vorhergehenden Ansprüche, **dadurch gekennzeichnet,** daß mindestens ein Ende des Langteils (2) an einem Kunststoffüberzug (6) fest inbesondere angeformt ist, der den Bügel (1) insbesondere das freie Bügelende umgibt.

9. Vorrichtung nach Anspruch 8, **dadurch gekennzeichnet,** daß der Kunststoffüberzug (6) über den Bügel (1) insbesondere über das freie Bügelende lösbar übergestreift ist.
